# EUROPEAN PATENT APPLICATION

(11) **EP 4 231 679 A1**
(43) Date of publication of application: **23.08.2023**
(21) Application number: 21884760.6
(22) Date of filing: 09.09.2021
(51) Int. Cl.: H04W 4/80

(54) **NETWORK ACCESS METHOD AND SYSTEM**

(30) Priority: 26.10.2020 CN 202011157493
(71) Applicant: GUANGDONG OPPO MOBILE TELECOMMUNICATIONS CORP., LTD., Dongguan, Guangdong 523860 (CN)
(72) Inventor: DENG, Hai, Dongguan, Guangdong 523860 (CN)
(74) Representative: Taor, Simon Edward William
(86) International application number: PCT/CN2021/117409
(87) International publication number: WO 2022/089030

(57) **Abstract**

Embodiments of the present disclosure disclose a network access method and system. Near Field Communication (NFC) communication is established with a mobile terminal through a first NFC chip. Wireless Fidelity (WIFI) data transmitted by a customer premise equipment through a short-range wireless connection is obtained, and is transmitted to the mobile terminal through the NFC communication, so that the mobile terminal is connected to the customer premise equipment based on the WIFI data. The mobile terminal can be quickly connected to the customer premise equipment while networking by touch is achieved.

## Description

This application claims a priority to Chinese Patent Application No. 202011157493.1, titled "NETWORK ACCESS METHOD AND SYSTEM", and filed with China National Intellectual Property Administration on October 26, 2020, the entire disclosure of which is incorporated herein by reference.

### FIELD

The present disclosure relates to the field of network communication technologies, and more particularly, to a network access method and system.

### BACKGROUND

With the development of communication technology, it is more and more common for a user to use a mobile terminal to log in a wireless network for various network accesses and interaction. For this reason, WIFI (Wireless Fidelity) networks are provided in schools, airports, stations, shopping malls, libraries, and an increasing number of leisure venues to facilitate network accesses of the user using the mobile terminal. When a password is set for a WIFI network, it is needed to search for or enter WIFI hotspot information and enter a corresponding password when the mobile terminal first connects to the WIFI network. To reduce the operational complexity of connecting to WIFI, a Customer Premise Equipment (CPE) that can be connected with by touch has emerged. The CPE is a signal access device that receives mobile signals and forwards them as wireless WIFI signals. For example, the CPE can convert a high-speed 4-th Generation Mobile Communication Technology (4G) or 5-th Generation Mobile Communication Technology (5G) signal into a WIFI signal. If one wants to have a good WIFI signal, there are certain requirements for a position of the CPE. For example, the CPE placed at an outdoor unobstructed position has a better signal. In this case, however, it is difficult for the mobile terminal to connect to the CPE quickly via networking by touch.

### SUMMARY

Embodiments of the present disclosure provide a network access method and system, enabling a mobile terminal to quickly connect to a customer premise equipment while achieving networking by touch.

In a first aspect, the embodiments of the present disclosure provide a network access method. The method is applied in a network relay device including a first Near Field Communication (NFC) chip, and includes: establishing a short-range wireless connection with a customer premise equipment, the short-range wireless connection being maintained in a constantly connected state; establishing NFC communication with a mobile terminal through the first NFC chip; and obtaining WIFI data transmitted by the customer premise equipment through the short-range wireless connection, and transmitting the WIFI data to the mobile terminal through the NFC communication, such that the mobile terminal is connected to the customer premise equipment based on the WIFI data.

In a second aspect, the embodiments of the present disclosure further provide a network access method. The method is applied in a customer premise equipment, and includes: establishing a short-range wireless connection with a network relay device, the short-range wireless connection being maintained in a constantly connected state; determining WIFI data to be transmitted, in response to a data transmission instruction being triggered; and transmitting the WIFI data to the network relay device through the short-range wireless connection. The network relay device establishes NFC communication with a mobile terminal, and transmits the WIFI data to the mobile terminal through the NFC communication, such that the mobile terminal is connected to the customer premise equipment based on the WIFI data.

In a third aspect, the embodiments of the present disclosure further provide a network relay device. The network relay device includes a first NFC chip, a first memory, and a first processor. The first memory stores a computer program. The first processor is configured to perform, through invoking the computer program, the network access method applied in the network relay device according to any of the embodiments of the present disclosure.

In a fourth aspect, the embodiments of the present disclosure further provide a customer premise equipment. The customer premise equipment includes a second memory and a second processor. The second memory stores a computer program. The second processor is configured to perform, through invoking the computer program, the network access method applied in the customer premise equipment according to any of the embodiments of the present disclosure.

In a fifth aspect, the embodiments of the present disclosure further provide a network access system. The network access system includes a customer premise equipment and a network relay device. The customer premise equipment is configured to establish a short-range wireless connection with the network relay device, the short-range wireless connection being maintained in a constantly connected state; determine WIFI data to be transmitted, in response to a data transmission instruction being triggered; and transmit the WIFI data to the network relay device through the short-range wireless connection. The network relay device is configured to receive the WIFI data transmitted by the customer premise equipment; and establish NFC communication with a mobile terminal through a first NFC chip, and transmit the WIFI data to the mobile terminal through the NFC communication, so that the mobile terminal is connected to the customer premise equipment based on the WIFI data.

### BRIEF DESCRIPTION OF THE DRAWINGS

To clearly explain technical solutions of embodiments of the present disclosure, drawings used in the description of the embodiments will be briefly described below. Obviously, the drawings as described below are merely some embodiments of the present disclosure. Based on these drawings, other drawings can be obtained by those skilled in the art without creative effort.
FIG. 1 is a first flowchart illustrating a network access method according to an embodiment of the present disclosure.
FIG. 2 is a schematic diagram of an application scenario of a network access method according to an embodiment of the present disclosure.
FIG. 3 is a second flowchart illustrating a network access method according to an embodiment of the present disclosure.
FIG. 4 is a schematic structural diagram of a network relay device according to an embodiment of the present disclosure.
FIG. 5 is a first schematic structural diagram of a customer premise equipment according to an embodiment of the present disclosure.
FIG. 6 is a second schematic structural diagram of a customer premise equipment according to an embodiment of the present disclosure.

### DETAILED DESCRIPTION

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the scope of the present disclosure.

References herein to "embodiment" mean that particular features, structures, or characteristics described in connection with the embodiment may be included in at least one embodiment of the present disclosure. The appearances of the phrase "embodiment" in various places throughout this specification neither necessarily refer to a same embodiment, nor refer to a separate or alternative embodiment that is mutually exclusive with other embodiments. It should be understood, both explicitly and implicitly, by those skilled in the art that the embodiments described herein can be combined with other embodiments.

The embodiments of the present disclosure provide a network access method. The method is applied in a network relay device including a first NFC chip, and includes: establishing a short-range wireless connection with a customer premise equipment, the short-range wireless connection being maintained in a constantly connected state; establishing NFC communication with a mobile terminal through the first NFC chip; and obtaining WIFI data transmitted by the customer premise equipment through the short-range wireless connection, and transmitting the WIFI data to the mobile terminal through the NFC communication, so that the mobile terminal is connected to the customer premise equipment based on the WIFI data.

In some embodiments, the operation of establishing the short-range wireless connection with the customer premise equipment includes: activating a short-range wireless communication function; and upon receiving a pairing request transmitted by the customer premise equipment, establishing the short-range wireless connection with the customer premise equipment in response to the pairing request.

In some embodiments, the operation of establishing the NFC communication with the mobile terminal through the first NFC chip includes: transmitting a first electromagnetic signal through the first NFC chip; and in response to detecting, through the first electromagnetic signal, that a mobile terminal is located within a predetermined electromagnetic disturbance range, establishing the NFC communication with the mobile terminal.

In some embodiments, the operation of establishing the NFC communication with the mobile terminal through the first NFC chip includes: establishing the NFC communication with the mobile terminal through the first NFC chip in response to detecting that the first NFC chip has been activated. When a mobile terminal including a second NFC chip is located within an effective range of the network relay device, the first NFC chip is activated by a second electromagnetic signal transmitted by the second NFC chip.

In some embodiments, the method further includes, subsequent to the operation of establishing the short-range wireless connection with the customer premise equipment: writing, in response to receiving WIFI data transmitted by the customer premise equipment through the short-range wireless connection, the WIFI data to the first NFC chip. The operation of obtaining the WIFI data transmitted by the customer premise equipment through the short-range wireless connection, and transmitting the WIFI data to the mobile terminal through the NFC communication includes: obtaining the WIFI data stored in the first NFC chip, and transmitting the obtained WIFI data to the mobile terminal through the NFC communication.

In some embodiments, the operation of obtaining the WIFI data transmitted by the customer premise equipment through the short-range wireless connection, and transmitting the WIFI data to the mobile terminal through the NFC communication includes: receiving WIFI data from the customer premise equipment through the short-range wireless connection; and transmitting the WIFI data received in real time to the mobile terminal through the NFC communication.

The embodiments of the present disclosure further provide a network access method. The method is applied in a customer premise equipment, and includes: establishing a short-range wireless connection with a network relay device, the short-range wireless connection being maintained in a constantly connected state; determining WIFI data to be transmitted, in response to a data transmission instruction being triggered; and transmitting the WIFI data to the network relay device through the short-range wireless connection. The network relay device establishes NFC communication with a mobile terminal, and transmits the WIFI data to the mobile terminal through the NFC communication, so that the mobile terminal is connected to the customer premise equipment based on the WIFI data.

In some embodiments, the method further includes, prior to the operation of determining the WIFI data to be transmitted: triggering the data transmission instruction in response to detecting a change in WIFI data; or triggering the data transmission instruction in response to receiving a data request transmitted by the network relay device.

In some embodiments, the operation of establishing the short-range wireless connection with the network relay device includes: activating a short-range wireless communication function, transmitting a search instruction to search for a pairable device, and receiving response information of the pairable device; determining whether the pairable device belongs to a predetermined network relay device, based on a device identifier carried in the response information; and in response to determining that the pairable device belongs to the predetermined network relay device, pairing with the pairable device to establish the short-range wireless connection.

In some embodiments, the short-range wireless connection is a Bluetooth connection. The operation of transmitting the WIFI data to the network relay device through the short-range wireless connection includes: transmitting the WIFI data to a plurality of network relay devices in a polling manner through the short-range wireless connection.

The embodiments of the present disclosure provide a network access method. An execution subject of the network access method may be a network relay device or a customer premise equipment according to the embodiments of the present disclosure.

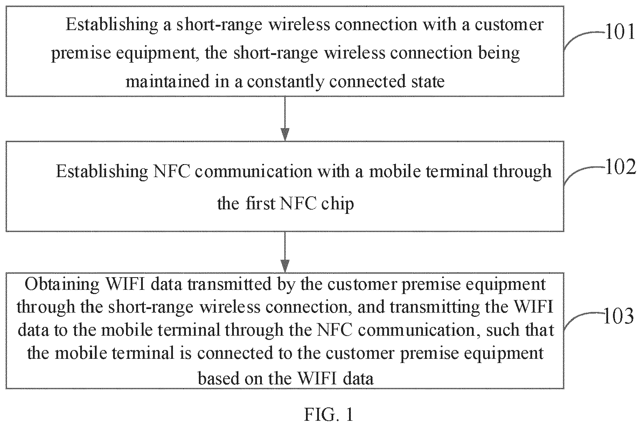

FIG. 1 is a first flowchart illustrating a network access method according to an embodiment of the present disclosure. The network access method according to this embodiment of the present disclosure is applied in a network relay device. Referring to FIG. 1, the method include the following specific processes.

At 101, a short-range wireless connection is established with a customer premise equipment. The short-range wireless connection is maintained in a constantly connected state.

The network relay device of the embodiments of the present disclosure may be configured to transmit WIFI data of the CPE to a mobile terminal, for the mobile terminal to connect to a wireless network device. The WIFI data includes data such as a Service Set Identifier (SSID), a password, an authentication manner, an encryption manner, a Media Access Control (MAC) address of the CPE.

One or more network relay devices may be provided, each of which may establish a short-range wireless connection with the customer premise equipment. The short-range wireless connection may be maintained in the constantly connected state. The customer premise equipment may transmit local WIFI data to the network relay device through the short-range wireless connection.

For example, when the WIFI data of the customer premise equipment is changed, a data update instruction is triggered. The updated WIFI data is transmitted, based on the data update instruction, to the network relay device through the short-range wireless connection. A user may set the WIFI data of the customer premise equipment through a WIFI data management interface provided by a WIFI management application (APP) on a mobile phone end, or a WIFI data management interface on a WEB page, e.g., modify data such as the password, the authentication manner, or the SSID. When any one or more pieces of these data are changed, the changed WIFI data is transmitted to the network relay device. When the customer premise equipment supports dual-frequency band WIFI, for example, WIFI in both the 2.4G frequency band and the 5G frequency band, WIFI data in both frequency bands can be transmitted to the network relay device.

In an embodiment, the operation of establishing the short-range wireless connection with the customer premise equipment may include: activating a short-range wireless communication function; and upon receiving a pairing request transmitted by the customer premise equipment, establishing the short-range wireless connection with the customer premise equipment in response to the pairing request.

In this embodiment, the network relay device activates its own short-range wireless communication function, such as a Bluetooth function. The customer premise equipment takes the initiative to search for a connectable device and initiates the pairing request. The network relay device responds to the pairing request to establish the short-range wireless connection with the customer premise equipment.

In some implementations, a communication distance of the short-range wireless connection may range from tens of meters to hundreds of meters. For example, the short-range wireless connection may be a Bluetooth connection, a Zigbee connection, a WIFI connection, or other short-range wireless connections. In addition, the short-range wireless connection may be in the constantly connected state. When the WIFI data of the customer premise equipment changes, the latest WIFI data may be transmitted in real time to the network relay device.

At 102, NFC communication is established with a mobile terminal through a first NFC chip.

The network relay device is provided with the first NFC chip. When a mobile terminal provided with a second NFC chip is located within an effective range of the network relay device, the mobile terminal establishes NFC communication with the network relay device. Since a communication distance of the NFC communication is generally smaller than ten centimeters, the mobile terminal needs to be at a distance smaller than ten centimeters from a position of the first NFC chip of the network relay device to establish the NFC communication.

An operating mode of the first NFC chip may be an active mode or a passive mode. For example, in an embodiment, the operation of establishing the NFC communication with the mobile terminal through the first NFC chip may include: transmitting a first electromagnetic signal through the first NFC chip; and in response to detecting, through the first electromagnetic signal, that a mobile terminal is located within a predetermined electromagnetic disturbance range, establishing the NFC communication with the mobile terminal.

In this embodiment, the network relay device needs to supply power to the first NFC chip. The first NFC chip transmits the first electromagnetic signal. When the mobile terminal is adjacent to a magnetic field disturbance range of the first electromagnetic signal, the second NFC chip obtains energy from the first electromagnetic signal to be powered up, and generates a wave having an inverse frequency to or a changed frequency property from a sine wave of the first electromagnetic signal. The first NFC chip may know that an NFC chip is nearby in response to detecting such a change.

For example, in another embodiment, the operation of establishing the NFC communication with the mobile terminal through the first NFC chip may include: establishing the NFC communication with the mobile terminal through the first NFC chip in response to detecting that the first NFC chip has been activated. When the mobile terminal including the second NFC chip is located within the effective range of the network relay device, the first NFC chip is activated by the second electromagnetic signal transmitted by the second NFC chip.

In this embodiment, it is unnecessary for the network relay device to supply power to the first NFC chip, and the second NFC chip of the mobile terminal is in the active mode. The second NFC chip continuously transmits the second electromagnetic signal. When the mobile terminal is adjacent to the network relay device, the network relay device is located within a magnetic field disturbance range of the second NFC chip. The second electromagnetic signal powers up the first NFC chip, in such a manner that the first NFC chip is activated, and establishes the NFC communication with the mobile terminal.

At 103, WIFI data transmitted by the customer premise equipment through the short-range wireless connection is obtained, and the WIFI data is transmitted to the mobile terminal through the NFC communication, so that the mobile terminal is connected to the customer premise equipment based on the WIFI data.

The network relay device may transmit the WIFI data of the customer premise equipment to the mobile terminal subsequent to establishing the NFC communication with the mobile terminal. Data obtaining and transmission may be implemented in a variety of manners, two of which will be described below.

For example, in an embodiment, the method further includes, subsequent to the operation of establishing the short-range wireless connection with the customer premise equipment: writing, in response to receiving WIFI data transmitted by the customer premise equipment through the short-range wireless connection, the WIFI data to the first NFC chip. The operation of obtaining the WIFI data transmitted by the customer premise equipment through the short-range wireless connection, and transmitting the WIFI data to the mobile terminal through the NFC communication includes: obtaining the WIFI data stored in the first NFC chip, and transmitting the obtained WIFI data to the mobile terminal through the NFC communication.

In this embodiment, for the customer premise equipment, the customer premise equipment may transmit the WIFI data to the network relay device in real time in response to detecting a change in the WIFI data. The network relay device may be in NFC communication with no mobile terminal when receiving the WIFI data. In this case, the WIFI data may be stored in the network relay device. The WIFI data may be transmitted to a mobile terminal when the NFC communication is established between the mobile terminal and the network relay device.

For example, in another embodiment, the operation at 103 may include: receiving WIFI data from the customer premise equipment through the short-range wireless connection; and transmitting the WIFI data received in real time to the mobile terminal through the NFC communication.

In this embodiment, the short-range wireless connection between the customer premise equipment and the network relay device is maintained in the constantly connected state, e.g., a Bluetooth connection is maintained constantly. In addition, the first NFC chip continuously transmits the first electromagnetic signal. When a mobile terminal approaches the network relay device and establishes the NFC communication, the network relay device activates the above-mentioned Bluetooth connection, requests the WIFI data from the customer premise equipment based on the Bluetooth connection, and then transmits the WIFI data transmitted by the customer premise equipment in real time to the mobile terminal through the NFC communication.

For the mobile terminal, the mobile terminal may connect, based on data such as the SSID, password, or authentication manner in the WIFI data, to a WIFI network provided by the customer premise equipment, subsequent to obtaining the WIFI data.

In practice, the present disclosure is not limited by an order in which various operations described are performed. Some steps may also be performed in other orders or simultaneously without conflict.

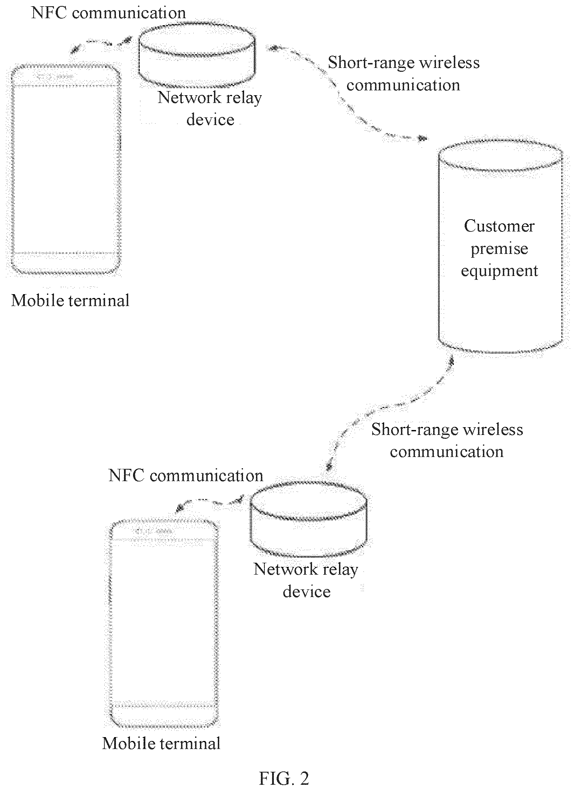

FIG. 2 is a schematic diagram of an application scenario of a network access method according to an embodiment of the present disclosure. Referring to FIG. 2, one customer premise equipment may be set up at a desired site, along with one or more network relay devices. The user may place, as needed, the customer premise equipment at a position having a good network signal, while placing the one or more network relay devices at position(s) that is easily accessible to the user. As an example, an application site of the customer premise equipment is a restaurant. The customer premise equipment may be placed at an outdoor position having a good signal, while the one or more network relay devices may be placed adjacent to dining table(s), in such a manner that the user can easily and quickly connect, by touching and via a corresponding one of the one or more network relay devices, to a WIFI network provided by the customer premise equipment while the short-range wireless connection between the network relay device and the customer premise equipment is maintained. For example, the customer premise equipment transmits WIFI data set locally to each network relay device through the short-range wireless connection. When the user needs to connect to a WIFI network device provided by the customer premise equipment, simply by means of activating an NFC function of the mobile terminal and bringing the mobile terminal in proximity to the network relay device, the WIFI data may be read from the network relay device, and the user may be automatically connected to the WIFI network provided by the customer premise equipment based on the WIFI data, without searching for or inputting WIFI hotspot information or entering a password. The mobile terminal may be a mobile phone, a tablet computer, a smart watch, or other devices.

As can be seen from the above description, in the network access method according to the embodiments of the present disclosure, the network relay device independent of the customer premise equipment is set, and may establish the short-range wireless connection with the customer premise equipment. On this basis, the network relay device may be placed at a distance from the customer premise equipment. Thus, the user may place the network relay device at a position that is convenient for him/her to touch. In addition, the above-mentioned short-range wireless connection is maintained in the constantly connected state, and the WIFI data can therefore be obtained from the customer premise equipment at any time. When the mobile terminal needs to connect to a WIFI service of the customer premise equipment, the NFC communication is established with the mobile terminal through the first NFC chip. That is, when adjacent to the network relay device, the mobile terminal may obtain, from the network relay device by means of touch, the WIFI data transmitted by the customer premise equipment through the short-range wireless connection, and then connect to the customer premise equipment based on the WIFI data. This solution enables the mobile terminal to connect to the customer premise equipment quickly while allowing for networking by touch.

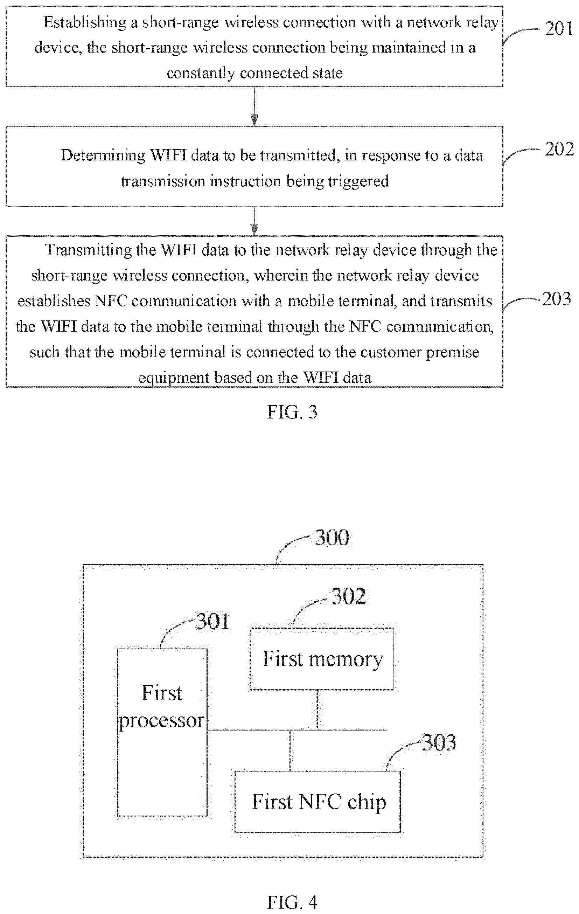

FIG. 3 is a second flowchart illustrating a network access method according to an embodiment of the present disclosure. The method is applied in a customer premise equipment. Referring to FIG. 3, the method includes the following operations.

At 201, a short-range wireless connection with a network relay device is established. The short-range wireless connection is maintained in a constantly connected state.

At 202, WIFI data to be transmitted is determined in response to a data transmission instruction being triggered.

At 203, the WIFI data is transmitted to the network relay device through the short-range wireless connection. The network relay device establishes NFC communication with a mobile terminal, and transmits the WIFI data to the mobile terminal through the NFC communication, so that the mobile terminal is connected to the customer premise equipment based on the WIFI data.

For the customer premise equipment, the customer premise equipment transmits the latest WIFI data to the network relay device through the short-range wireless connection with the network relay device. A specific implementation in this regard can be referred to the embodiments described above, and details thereof will be omitted herein.

In the embodiments of the present disclosure, the data transmission instruction may be triggered in response to a change in the WIFI data of the customer premise equipment. For example, when the customer premise equipment detects that the user changes a WIFI password, the changed WIFI data may be transmitted to the network relay device in real time. Or, in some embodiments, the network relay device may take the initiative to request the WIFI data from the customer premise equipment, and trigger the data transmission instruction when the customer premise equipment receives a data request transmitted by the network relay device.

In some embodiments, the short-range wireless connection is a Bluetooth connection. When a plurality of network relay devices establishes the short-range wireless connection with the customer premise equipment, the customer premise equipment transmits the WIFI data to the plurality of network relay devices in a polling manner through the Bluetooth connection.

In some embodiments, the operation of establishing the short-range wireless connection with the network relay device includes: activating a short-range wireless communication function, transmitting a search instruction to search for a pairable device, and receiving response information of the pairable device; determining whether the pairable device belongs to a predetermined network relay device, based on a device identifier carried in the response information; and in response to determining that the pairable device belongs to the predetermined network relay device, pairing with the pairable device to establish the short-range wireless connection.

In this embodiment, permission for the network relay device to access the customer premise equipment is restricted, and a whitelist is established. A device identifier of a network relay device that has access permission is added to the whitelist. During device pairing, only a device in the whitelist is allowed to pair and connect with the customer premise equipment.

As can be seen from the above description, the network access method according to the embodiments of the present disclosure may be applied in the customer premise equipment. The customer premise equipment may establish the short-range wireless connection with the network relay device, the short-range wireless connection being maintained in the constantly connected state; determine, in response to the data transmission instruction being triggered, the WIFI data to be transmitted; and transmit the WIFI data to the network relay device through the above-mentioned short-range wireless connection, in such a manner that the network relay device transmits the WIFI data to the mobile terminal through the NFC communication, allowing the mobile terminal to connect to the network of the customer premise equipment based on the WIFI data. When needing to connect to the WIFI service of the customer premise equipment, the mobile terminal obtains the WIFI data from the network relay device based on the NFC communication, to connect to the customer premise equipment based on the WIFI data. In this solution, since the network relay device is set independently of the customer premise equipment and transmits data through the short-range wireless connection, data transmission is possible even when a distance exists between the network relay device and the customer premise equipment. Therefore, the user may place the network relay device at a position that is convenient for him/her to touch. In addition, the above-mentioned short-range wireless connection is maintained in the constantly connected state, and the customer premise equipment can therefore transmit the WIFI data to the network relay device at any time, which enables the mobile terminal to connect to the customer premise equipment quickly while allowing for networking by touch.

The embodiments of the present disclosure further provide a network relay device. FIG. 4 is a first schematic structural diagram of a network relay device according to an embodiment of the present disclosure. Referring to FIG. 4, a network relay device 300 includes a first processor 301, a first memory 302, and a first NFC chip 303. The first processor 301, the first NFC chip 303, and the first memory 302 are electrically connected.

The first processor 301, as a control center of the network relay device 300, connects to different parts of the entire network relay device using interfaces and lines, and performs functions of the network relay device and processes data by means of executing or invoking a computer program stored in the first memory 302 and by means of invoking data stored in the first memory 302, thereby providing overall monitoring of the network relay device.

The first memory 302 may be configured to store a computer program and data. The computer program stored in the first memory 302 contains instructions executable in the first processor. The computer program may form various functional modules. The first processor 301 performs various functional applications and data processing by means of invoking the computer program stored in the first memory 302.

In this embodiment, the first processor 301 in the network relay device 300 may load instructions corresponding to one or more processes of the computer program into the first memory 302 in accordance with the following steps, and execute the computer program stored in the first memory 302 to perform the following functions of: establishing a short-range wireless connection with a customer premise equipment, the short-range wireless connection being maintained in a constantly connected state; establishing NFC communication with a mobile terminal through the first NFC chip; and obtaining WIFI data transmitted by the customer premise equipment through the short-range wireless connection, and transmitting the WIFI data to the mobile terminal through the NFC communication, so that the mobile terminal is connected to the customer premise equipment based on the WIFI data.

As can be seen from the above description, the embodiments of the present disclosure provide the network relay device. The network relay device is set independently of the customer premise equipment, and may establish the short-range wireless connection with the customer premise equipment. On this basis the network relay device may be placed at a distance from the customer premise equipment. Thus, the user may place the network relay device at a position that is convenient for him/her to touch. In addition, the above-mentioned short-range wireless connection is maintained in the constantly connected state, and the WIFI data can therefore be obtained from the customer premise equipment at any time. When the mobile terminal needs to connect to the WIFI service of the customer premise equipment, the NFC communication is established with the mobile terminal through the first NFC chip. That is, when adjacent to the network relay device, the mobile terminal may obtain, from the network relay device by means of touch, the WIFI data transmitted by the customer premise equipment through the short-range wireless connection, and then connect to the customer premise equipment based on the WIFI data. This solution enables the mobile terminal to connect to the customer premise equipment quickly while allowing for networking by touch.

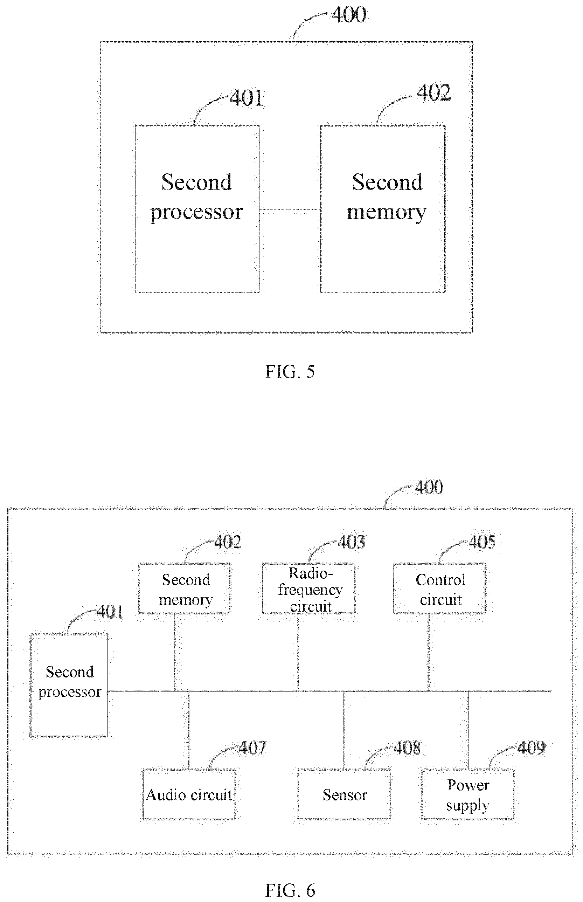

The embodiments of the present disclosure further provide a customer premise equipment. The customer premise equipment may be a smartphone, a tablet computer, etc. FIG. 5 is a first schematic structural diagram of a customer premise equipment according to an embodiment of the present disclosure. Referring to FIG. 5, a customer premise equipment 400 includes a second processor 401 and a second memory 402. The second processor 401 is electrically connected to the second memory 402.

The second processor 401, as a control center of the customer premise equipment 400, connects to various parts of the entire customer premise equipment using interfaces and lines, and performs functions of the customer premise equipment and processes data by means of executing or invoking a computer program stored in the second memory 402 and by means of invoking data stored in the second memory 402, thereby providing overall monitoring of the customer premise equipment.

The second memory 402 may be configured to store a computer program and data. The computer program stored in the second memory 402 contains instructions executable in the second processor. The computer program may form various functional modules. The second processor 401 performs various functional applications and data processing by means of invoking the computer program stored in the second memory 402.

In this embodiment, the second processor 401 in the customer premise equipment 400 may load instructions corresponding to one or more processes of the computer program into the second memory 402 in accordance with the following steps and execute the computer program stored in the second memory 402 to perform the following functions of: establishing a short-range wireless connection with a network relay device, the short-range wireless connection being maintained in a constantly connected state; determining WIFI data to be transmitted, in response to a data transmission instruction being triggered; and transmitting the WIFI data to the network relay device through the short-range wireless connection. The network relay device establishes NFC communication with a mobile terminal, and transmits the WIFI data to the mobile terminal through the NFC communication, so that the mobile terminal is connected to the customer premise equipment based on the WIFI data.

FIG. 6 is a second schematic structural diagram of a customer premise equipment according to an embodiment of the present disclosure. In some embodiments, referring to FIG. 6, the customer premise equipment 400 further includes a radio-frequency circuit 403, a control circuit 405, an audio circuit 407, a sensor 408, and a power supply 409. The second processor 401 is electrically connected to each of the radio-frequency circuit 403, the control circuit 405, the audio circuit 407, the sensor 408, and the power supply 409.

The radio-frequency circuit 403 is configured to transmit and receive radio-frequency signals to communicate with a network device or other customer premise equipment through wireless communication.

The control circuit 405 is electrically connected to the second processor 401 to control display information.

The audio circuit 407 may provide an audio interface between the user and the customer premise equipment through a speaker or a microphone. The audio circuit 407 includes the microphone. The microphone is electrically connected to the second processor 401. The microphone is configured to receive voice information inputted by the user.

The sensor 408 is configured to collect external environmental information. The sensor 408 may include one or more of an ambient brightness sensor, an acceleration sensor, a gyroscope, and other sensors.

The power supply 409 is configured to supply power to various components of the customer premise equipment 400. In some embodiments, the power supply 409 may be logically connected to the second processor 401 through a power management system to enable, through the power management system, functions such as charging management, discharging, and power consumption management.

Although not illustrated in the figures, the customer premise equipment 400 may further include a camera, a Bluetooth module, etc., details of which will be omitted herein.

In this embodiment, the second processor 401 in the customer premise equipment 400 may load instructions corresponding to one or more processes of the computer program into the second memory 402 in accordance with the following steps and execute the computer program stored in the second memory 402 to perform the following functions of: establishing a short-range wireless connection with a network relay device, the short-range wireless connection being maintained in a constantly connected state; determining WIFI data to be transmitted, in response to a data transmission instruction being triggered; and transmitting the WIFI data to the network relay device through the short-range wireless connection. The network relay device establishes NFC communication with a mobile terminal, and transmits the WIFI data to the mobile terminal through the NFC communication, so that the mobile terminal is connected to the customer premise equipment based on the WIFI data.

In some embodiments, the second processor 401 further performs: triggering the data transmission instruction in response to detecting a change in WIFI data; or triggering the data transmission instruction in response to receiving a data request transmitted by the network relay device.

In some embodiments, the second processor 401 further performs: activating a short-range wireless communication function, transmitting a search instruction to search for a pairable device, and receiving response information of the pairable device; determining whether the pairable device belongs to a predetermined network relay device, based on a device identifier carried in the response information; and in response to determining that the pairable device belongs to the predetermined network relay device, pairing with the pairable device to establish the short-range wireless connection.

As can be seen from the above description, the embodiments of the present disclosure provide the customer premise equipment. The customer premise equipment may establish the short-range wireless connection with the network relay device, the short-range wireless connection being maintained in the constantly connected state; determine, in response to the data transmission instruction being triggered, the WIFI data to be transmitted; and transmit the WIFI data to the network relay device through the above-mentioned short-range wireless connection, in such a manner that the network relay device transmits the WIFI data to the mobile terminal through the NFC communication, allowing the mobile terminal to connect to the network of the customer premise equipment based on the WIFI data. When needing to connect to the WIFI service of the customer premise equipment, the mobile terminal obtains the WIFI data from the network relay device based on the NFC communication, to connect to the customer premise equipment based on the WIFI data. In this solution, since the network relay device is set independently of the customer premise equipment and transmits data through the short-range wireless connection, data transmission is possible even when a distance exists between the network relay device and the customer premise equipment. Therefore, the user may place the network relay device at a position that is convenient for him/her to touch. In addition, the above-mentioned short-range wireless connection is maintained in the constantly connected state, and the customer premise equipment can therefore transmit the WIFI data to the network relay device at any time, which enables the mobile terminal to connect to the customer premise equipment quickly while allowing for networking by touch.

The embodiments of the present disclosure further provide a network access system. The network access system includes a customer premise equipment and a network relay device. The customer premise equipment is configured to establish a short-range wireless connection with the network relay device, the short-range wireless connection being maintained in a constantly connected state; determine WIFI data to be transmitted, in response to a data transmission instruction being triggered; and transmit the WIFI data to the network relay device through the short-range wireless connection. The network relay device is configured to receive the WIFI data transmitted by the customer premise equipment; and establish NFC communication with a mobile terminal through a first NFC chip, and transmit the WIFI data to the mobile terminal through the NFC communication, so that the mobile terminal is connected to the customer premise equipment based on the WIFI data.

In some embodiments, the network relay device is further configured to: activate a short-range wireless communication function; and upon receiving a pairing request transmitted by the customer premise equipment, establish the short-range wireless connection with the customer premise equipment in response to the pairing request.

In some embodiments, the network relay device is further configured to: transmit a first electromagnetic signal through the first NFC chip; and in response to detecting, through the first electromagnetic signal, that a mobile terminal is located within a predetermined electromagnetic disturbance range, establish the NFC communication with the mobile terminal.

In some embodiments, the network relay device is further configured to: establish the NFC communication with the mobile terminal through the first NFC chip in response to detecting that the first NFC chip has been activated. When a mobile terminal including a second NFC chip is located within an effective range of the network relay device, the first NFC chip is activated by a second electromagnetic signal transmitted by the second NFC chip.

In some embodiments, the network relay device is further configured to: write, in response to receiving the WIFI data transmitted by the customer premise equipment through the short-range wireless connection, the WIFI data to the first NFC chip; and transmit, in response to detecting that NFC communication with the mobile terminal is established through the first NFC chip, the WIFI data stored in the first NFC chip to the mobile terminal through the NFC communication.

In some embodiments, the network relay device is further configured to: receive, in response to detecting that NFC communication with the mobile terminal is established through the first NFC chip, the WIFI data from the customer premise equipment through the short-range wireless connection; and transmit the WIFI data received in real time to the mobile terminal through the NFC communication.

In some embodiments, the customer premise equipment is further configured to: trigger the data transmission instruction in response to detecting a change in the WIFI data.

In some embodiments, the customer premise equipment is further configured to: trigger the data transmission instruction in response to receiving a data request transmitted by the network relay device.

In some embodiments, the customer premise equipment is further configured to: activate a short-range wireless communication function, transmit a search instruction to search for a pairable device, and receive response information of the pairable device; determine whether the pairable device belongs to a predetermined network relay device, based on a device identifier carried in the response information; and in response to determining that the pairable device belongs to the predetermined network relay device, pair with the pairable device to establish the short-range wireless connection.

In some embodiments, the short-range wireless connection is a Bluetooth connection. The customer premise equipment is further configured to: transmit the WIFI data to a plurality of network relay devices in a polling manner through the short-range wireless connection.

The embodiments of the present disclosure further provide a network access system. The network access system includes a customer premise equipment and a network relay device. The customer premise equipment is configured to establish a short-range wireless connection with a network relay device, the short-range wireless connection being maintained in a constantly connected state; determine WIFI data to be transmitted, in response to a data transmission instruction being triggered; and transmit the WIFI data to the network relay device through the short-range wireless connection. The network relay device is configured to receive the WIFI data transmitted by the customer premise equipment; and establish NFC communication with a mobile terminal through a first NFC chip, and transmit the WIFI data to the mobile terminal through the NFC communication, so that the mobile terminal is connected to the customer premise equipment based on the WIFI data.

In some embodiments, the network relay device is further configured to: write, in response to receiving the WIFI data transmitted by the customer premise equipment through the short-range wireless connection, the WIFI data to the first NFC chip; and transmit, in response to detecting that NFC communication with the mobile terminal is established through the first NFC chip, the WIFI data stored in the first NFC chip to the mobile terminal through the NFC communication.

In some embodiments, the network relay device is further configured to: receive, in response to detecting that NFC communication with the mobile terminal is established through the first NFC chip, the WIFI data from the customer premise equipment through the short-range wireless connection; and transmit the WIFI data received in real time to the mobile terminal through the NFC communication.

Specific implementation processes can be referred to the embodiments of the network access method described above, and details thereof will be omitted herein.

It should be noted that, those skilled in the art can appreciate that all or part of the steps in the methods of the above embodiments can be implemented by relevant hardware following instructions of a computer program. The computer program can be stored in a computer-readable storage medium. The storage medium may include, but is not limited to, a Read Only Memory (ROM), a Random Access Memory (RAM), a magnetic disk, an optical disk, or the like.

In addition, terms such as "first", "second", and "third" in the present disclosure are used to distinguish different objects, rather than to describe a specific sequence. In addition, terms "including" and "having" and any variations thereof are intended to cover non-exclusive inclusions. For example, a process, method, system, product, or device that includes a series of steps or modules is not limited to the listed steps or modules, and also, other steps or modules that are not listed or are inherent to the process, method, product, or device may be included in other embodiments.

The network access method and system, network relay device, and customer premise equipment according to the embodiments of the present disclosure are described in detail above. Specific examples are applied herein to illustrate the principles and implementations of the present disclosure. The description of the above embodiments is only intended to facilitate understanding of the method of the present disclosure and its core concepts. Also, it is conceivable for those skilled in the art that changes can be made to specific implementations and the scope of application based on the concepts of the present disclosure. In summary, the contents of this specification shall not be construed as limiting the present disclosure.

## Claims

1. A network access method, applied in a network relay device comprising a first Near Field Communication (NFC) chip, the method comprising:
establishing a short-range wireless connection with a customer premise equipment, wherein the short-range wireless connection is maintained in a constantly connected state;
establishing NFC communication with a mobile terminal through the first NFC chip; and
obtaining Wireless Fidelity (WIFI) data transmitted by the customer premise equipment through the short-range wireless connection, and transmitting the WIFI data to the mobile terminal through the NFC communication, such that the mobile terminal is connected to the customer premise equipment based on the WIFI data.

2. The network access method according to claim 1, wherein said establishing the short-range wireless connection with the customer premise equipment comprises:
activating a short-range wireless communication function; and
establishing, upon receiving a pairing request transmitted by the customer premise equipment, the short-range wireless connection with the customer premise equipment in response to the pairing request.

3. The network access method according to claim 1, wherein said establishing the NFC communication with the mobile terminal through the first NFC chip comprises:
transmitting a first electromagnetic signal through the first NFC chip; and
establishing the NFC communication with the mobile terminal in response to detecting, through the first electromagnetic signal, that the mobile terminal is located within a predetermined electromagnetic disturbance range.

4. The network access method according to claim 1, wherein said establishing the NFC communication with the mobile terminal through the first NFC chip comprises:
establishing the NFC communication with the mobile terminal through the first NFC chip in response to detecting that the first NFC chip has been activated, wherein when a mobile terminal comprising a second NFC chip is located within an effective range of the network relay device, the first NFC chip is activated by a second electromagnetic signal transmitted by the second NFC chip.

5. The network access method according to any one of claims 1 to 4, further comprising, subsequent to said establishing the short-range wireless connection with the customer premise equipment:
writing, in response to receiving WIFI data transmitted by the customer premise equipment through the short-range wireless connection, the WIFI data to the first NFC chip, wherein
said obtaining the WIFI data transmitted by the customer premise equipment through the short-range wireless connection, and transmitting the WIFI data to the mobile terminal through the NFC communication comprises:
obtaining the WIFI data stored in the first NFC chip, and transmitting the obtained WIFI data to the mobile terminal through the NFC communication.

6. The network access method according to any one of claims 1 to 4, wherein said obtaining the WIFI data transmitted by the customer premise equipment through the short-range wireless connection, and transmitting the WIFI data to the mobile terminal through the NFC communication comprises:
receiving the WIFI data from the customer premise equipment through the short-range wireless connection; and
transmitting the WIFI data received in real time to the mobile terminal through the NFC communication.

7. A network access method, applied in a customer premise equipment, the method comprising:
establishing a short-range wireless connection with a network relay device, wherein the short-range wireless connection is maintained in a constantly connected state;
determining WIFI data to be transmitted, in response to a data transmission instruction being triggered; and
transmitting the WIFI data to the network relay device through the short-range wireless connection, wherein the network relay device establishes NFC communication with a mobile terminal, and transmits the WIFI data to the mobile terminal through the NFC communication, such that the mobile terminal is connected to the customer premise equipment based on the WIFI data.

8. The network access method according to claim 7, further comprising, prior to said determining the WIFI data to be transmitted:
triggering the data transmission instruction in response to detecting a change in WIFI data; or
triggering the data transmission instruction in response to receiving a data request transmitted by the network relay device.

9. The network access method according to claim 7, wherein said establishing the short-range wireless connection with the network relay device comprises:
activating a short-range wireless communication function, transmitting a search instruction to search for a pairable device, and receiving response information from the pairable device;
determining whether the pairable device belongs to a predetermined network relay device, based on a device identifier carried in the response information; and
pairing, in response to determining that the pairable device belongs to the predetermined network relay device, with the pairable device to establish the short-range wireless connection.

10. The network access method according to claim 7, wherein the short-range wireless connection is a Bluetooth connection, and wherein said transmitting the WIFI data to the network relay device through the short-range wireless connection comprises:
transmitting the WIFI data to a plurality of network relay devices in a polling manner through the short-range wireless connection.

11. A network access system, comprising:
a customer premise equipment, configured to: establish a short-range wireless connection with a network relay device, the short-range wireless connection being maintained in a constantly connected state; determine WIFI data to be transmitted, in response to a data transmission instruction being triggered; and transmit the WIFI data to the network relay device through the short-range wireless connection; and
the network relay device, configured to: receive the WIFI data transmitted by the customer premise equipment; and establish NFC communication with a mobile terminal through a first NFC chip, and transmit the WIFI data to the mobile terminal through the NFC communication, such that the mobile terminal is connected to the customer premise equipment based on the WIFI data.

12. The network access system according to claim 11, wherein the network relay device is further configured to:
activate a short-range wireless communication function; and
establish, upon receiving a pairing request transmitted by the customer premise equipment, the short-range wireless connection with the customer premise equipment in response to the pairing request.

13. The network access system according to claim 11, wherein the network relay device is further configured to:
transmit a first electromagnetic signal through the first NFC chip; and
establish the NFC communication with the mobile terminal in response to detecting, through the first electromagnetic signal, that the mobile terminal is located within a predetermined electromagnetic disturbance range.

14. The network access system according to claim 11, wherein the network relay device is further configured to:
establish the NFC communication with the mobile terminal through the first NFC chip in response to detecting that the first NFC chip has been activated, wherein when a mobile terminal comprising a second NFC chip is located within an effective range of the network relay device, the first NFC chip is activated by a second electromagnetic signal transmitted by the second NFC chip.

15. The network access system according to claim 11, wherein the network relay device is further configured to:
write, in response to receiving the WIFI data transmitted by the customer premise equipment through the short-range wireless connection, the WIFI data to the first NFC chip; and
transmit, in response to detecting that NFC communication with the mobile terminal is established through the first NFC chip, the WIFI data stored in the first NFC chip to the mobile terminal through the NFC communication.

16. The network access system according to claim 11, wherein the network relay device is further configured to:
receive, in response to detecting that NFC communication with the mobile terminal is established through the first NFC chip, the WIFI data from the customer premise equipment through the short-range wireless connection; and
transmit the WIFI data received in real time to the mobile terminal through the NFC communication.

17. The network access system according to claim 11, wherein the customer premise equipment is further configured to:
trigger the data transmission instruction in response to detecting a change in the WIFI data.

18. The network access system according to claim 11, wherein the customer premise equipment is further configured to:
trigger the data transmission instruction in response to receiving a data request transmitted by the network relay device.

19. The network access system according to claim 11, wherein the customer premise equipment is further configured to:
activate a short-range wireless communication function, transmit a search instruction to search for a pairable device, and receive response information from the pairable device;
determine whether the pairable device belongs to a predetermined network relay device, based on a device identifier carried in the response information; and
pair, in response to determining that the pairable device belongs to the predetermined network relay device, with the pairable device to establish the short-range wireless connection.

20. The network access system according to claim 11, wherein the short-range wireless connection is a Bluetooth connection, and wherein the customer premise equipment is further configured to:
transmit the WIFI data to a plurality of network relay devices in a polling manner through the short-range wireless connection.
